Europäisches Patentamt

European Patent Office

Office européen des brevets

(19)

(11) Publication number: **0 103 755**
**A2**

# (12) EUROPEAN PATENT APPLICATION

(21) Application number: **83108170.8**

(22) Date of filing: **18.08.83**

(51) Int. Cl.³: **G 06 F 1/00**

(30) Priority: **19.08.82 JP 143708/82**

(43) Date of publication of application:
**28.03.84 Bulletin 84/13**

(84) Designated Contracting States:
**DE GB IT**

(71) Applicant: **TOKYO SHIBAURA DENKI KABUSHIKI KAISHA**
**72, Horikawa-cho Saiwai-ku**
**Kawasaki-shi Kanagawa-ken 210(JP)**

(72) Inventor: **Eguchi, Seiji**
**3750 Yanokuchi**
**Inagi-shi Tokyo(JP)**

(72) Inventor: **Nojima, Minejirou**
**1-9-5 Oamachi**
**Kamakura-shi Kanagawa-ken(JP)**

(72) Inventor: **Tasaka, Naoyasu**
**Toshiba-Shinkoyasu-ryo 2-14-10 Shinkoyasu**
**Kanagawa-ku Yokohama-shi(JP)**

(74) Representative: **Lehn, Werner, Dipl.-Ing. et al,**
**Hoffmann, Eitle & Partner Patentanwälte Arabellastrasse**
**4 (Sternhaus)**
**D-8000 München 81(DE)**

(54) CMOS single chip microprocessor.

(57) A CMOS single chip microprocessor comprises an oscillator (62) and a timing generator (60) for allowing internal circuits to periodically execute program processings in response to an operation control signal ($\overline{HOLD}$) having a fixed cycle period. To reduce electric power consumption, command signals (COM1 to COM4) are generated after the execution of each program processing, and a circuit means (53 to 59, 68 to 72) is provided which causes the oscillator (62) and the timing generator (60) to become inoperative in response to the command signals (COM1, COM2) regardless of the level of the operation control signal, and restarts the operations of the oscillator and the timing generator in response to the transition from a first level to a second level of the operation control signal.

./...

FIG. 5

- 1 -

CMOS single chip microprocessor

The present invention relates to a CMOS single chip microprocessor having a hold operation control function.

The holding function of the CMOS microprocessor is the function to hold the contents of the data memory, program-counter and registers immediately before the operation of the entire system is stopped at a lower power consumption by using electric characteristics of a CMOS circuit.

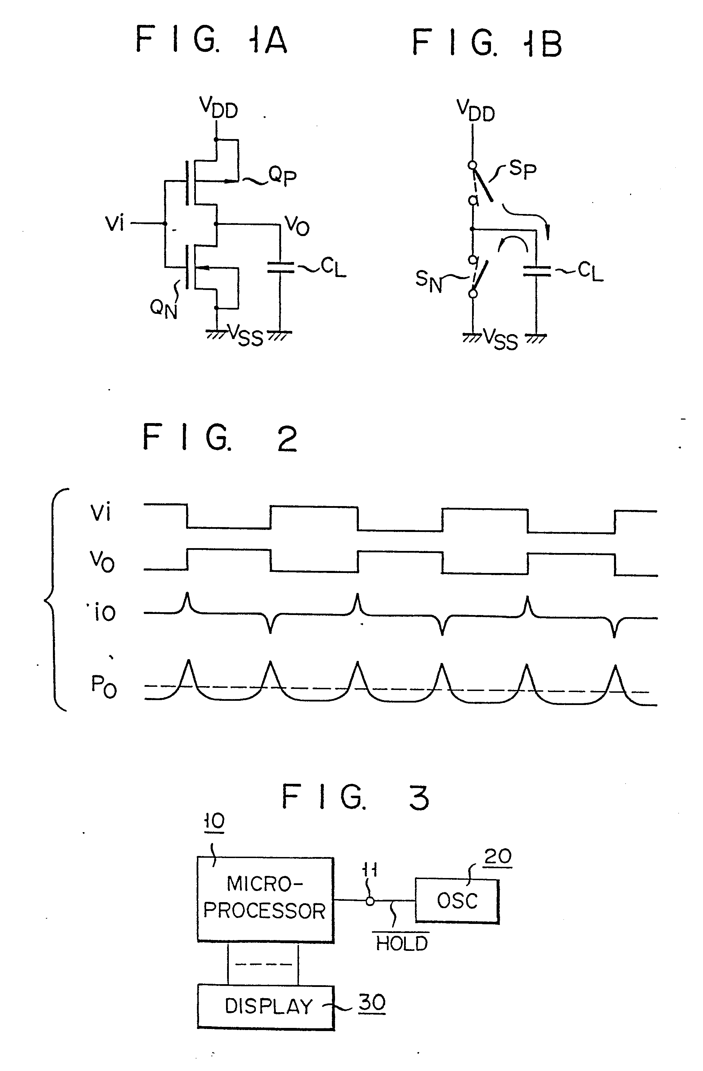

The power consumption of the CMOS circuit will now be described. Referring to Fig. 1A, a CMOS inverter consists of a p-channel MOS transistor $Q_p$ and an n-channel MOS transistor $Q_N$. $C_L$ indicates a stray capacitance at the output node of the inverter. Such a CMOS inverter may be shown as an equivalent circuit using switches $S_p$ and $S_N$ as in Fig. 1B.

The waveforms of an input voltage $V_i$ and an output voltage $V_O$ of the CMOS inverter are as shown in Fig. 2. Current $i_O$ flows which charges or discharges the capacitance $C_L$ at the leading and trailing edges of the input voltage $V_i$ as shown. The power that will be consumed in the CMOS inverter is represented as a product of the output voltage $V_O$ and the current $i_O$. This power consumption $P_O$ is shown in Fig. 2, and its average power level is indicated by the broken line. As can be seen from Fig. 2, in the CMOS circuit the power is consumed at the switching times. In other words, the power consumption in the quiescent condition is reduced to zero except the power consumption due to leak component. With the CMOS microprocessor, the low power consumption is achieved by stopping all switching operations of the oscillator and other circuits during the holding operation.

With conventional single-chip microprocessors, the holding operation is controlled by the level of a control signal applied to a hold control terminal. A practical method of achieving the hold operation control is a direct control method using hardware. According to this method, the hardware performs the holding operation in response to the control signal dropping to a low level and restarts the normal operation in response to the control signal going to a high level. Another method uses a combination of software and hardware such that, when the low level of the control signal is detected by a program, the holding operation is started and, when the hardware detects the control signal rises to the high level, the normal operation is restarted.

As described above, in the prior-art microprocessors, the holding operation is controlled fundamentally on the basis of a control signal applied from outside. Therefore, the methods described above have a problem in terms of power consumption when the microprocessor is applied to such a processing as described below.

Fig. 3 shows a microcomputer system using the CMOS single chip microprocessor. As shown, a time counting reference signal having a 50-% duty cycle which is produced by an external oscillator 20 of low power consumption type is supplied to a hold control external terminal ($\overline{\text{HOLD}}$ signal input terminal) 11 of a microprocessor 10, so that short-time program processings for clock or timer application are repeatedly executed at the fixed period of the time-counting reference signal. The processing results are sequentially displayed by a display device 30. When a signal HOLD at the terminal 11 is at a high level, the microprocessor 10 operates to carry out predetermined program processings, and when the signal $\overline{HOLD}$ reaches a low level, the holding operation is commenced. In this case, since, when the program processing is completed in an extremely short time, the signal $\overline{HOLD}$ is not at a hold operation request level, the microprocessor 10 has to be operating to perform the dummy processing.

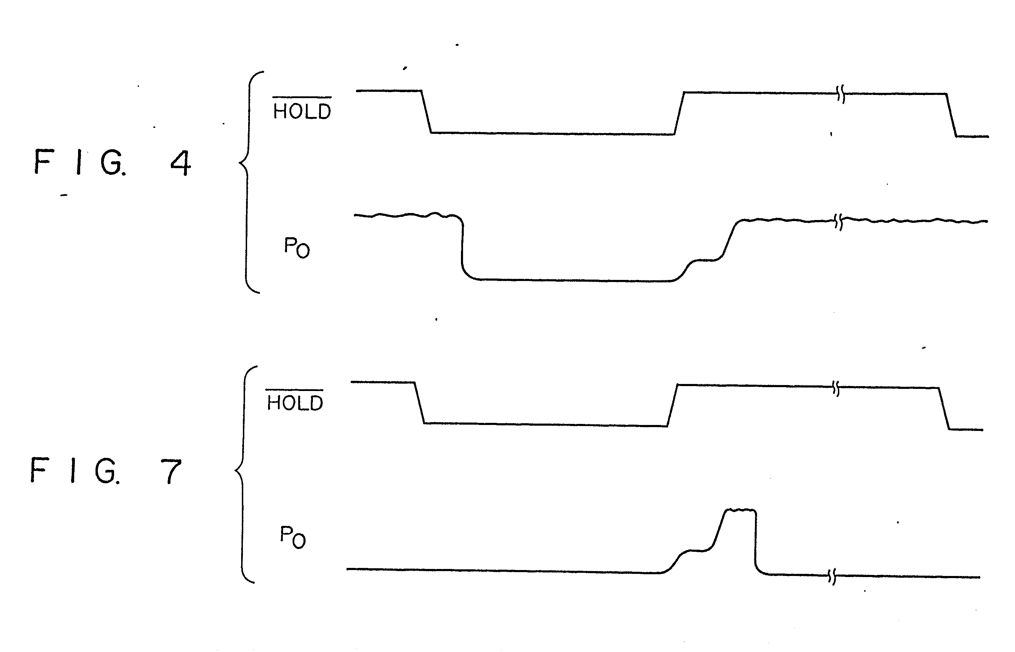

Fig. 4 shows the relation between the signal $\overline{HOLD}$ and the power consumption $P_O$ at the microprocessor 10 in the above-mentioned operation. As can be seen in Fig. 4, after it has been detected by the program that the signal $\overline{HOLD}$ has changes from the high level to the low leve, the power consumption $P_O$ becomes zero. Next, when the signal $\overline{HOLD}$ becomes high, the oscillator circuit built in the microprocessor 10 starts oscillating. In this case, the other internal circuits do not operate until the operation of the oscillator circuit becomes stable, so that the power consumption, immediately after the signal $\overline{HOLD}$ shifts to the high level, is small. When the operation of the oscillator circuit becomes stable, other internal circuits start operation, so that the power consumption increases.

After the signal $\overline{HOLD}$ shifts to the high level, the microprocessor 10 carries out the program processing for the clock or timer. Since such program processing is executed in an extremely short time, the unwanted power is consumed due to the dummy processing or the like during substantially the normal operation period in which the signal $\overline{HOLD}$ is at the high level.

It is an object of the present invention to provide a CMOS single chip microprocessor which is arranged to start the holding operation in accordance with a program regardless of the level of operation control signal and to restart the normal operation in response to a change in the level of the hold operation control signal, thereby reducing the electric power consumption.

The above object is accomplished by providing first means for generating command signals in accordance with program processing, and second means connected to receive the command signals and the operation control signal for stopping the operation of an oscillator and a timing generator in response to the command signals regardless of the level of the operation control signal and to restart the operation of the oscillator and the timing generator in response to the transition from a first level to a second level of the operation control signal, thereby allowing the program processing to be executed.

This invention can be more fully understood from the following detailed description when taken in conjunction with the accompanying drawings, in which:

Figs. 1A and 1B are a circuit diagram and its equivalent circuit diagram of a CMOS inverter;

Fig. 2 is a waveform diagram showing the characteristics of the CMOS inverter of Fig. 1A;

Fig. 3 is a block diagram of an apparatus using a CMOS single chip microprocessor;

Fig. 4 is a diagram explaining the holding operation and the power consumption of the apparatus of Fig. 3;

Fig. 5 shows a structure of the principal section of a single chip microprocessor embodying the present invention;

Fig. 6 shows timing charts to explain the operation of the circuit of Fig. 5;

Fig. 7 is a diagram for explaining the power consumption of the microprocessor of Fig. 5; and

Fig. 8 shows timing charts to explain another operation of the microprocessor of Fig. 5.

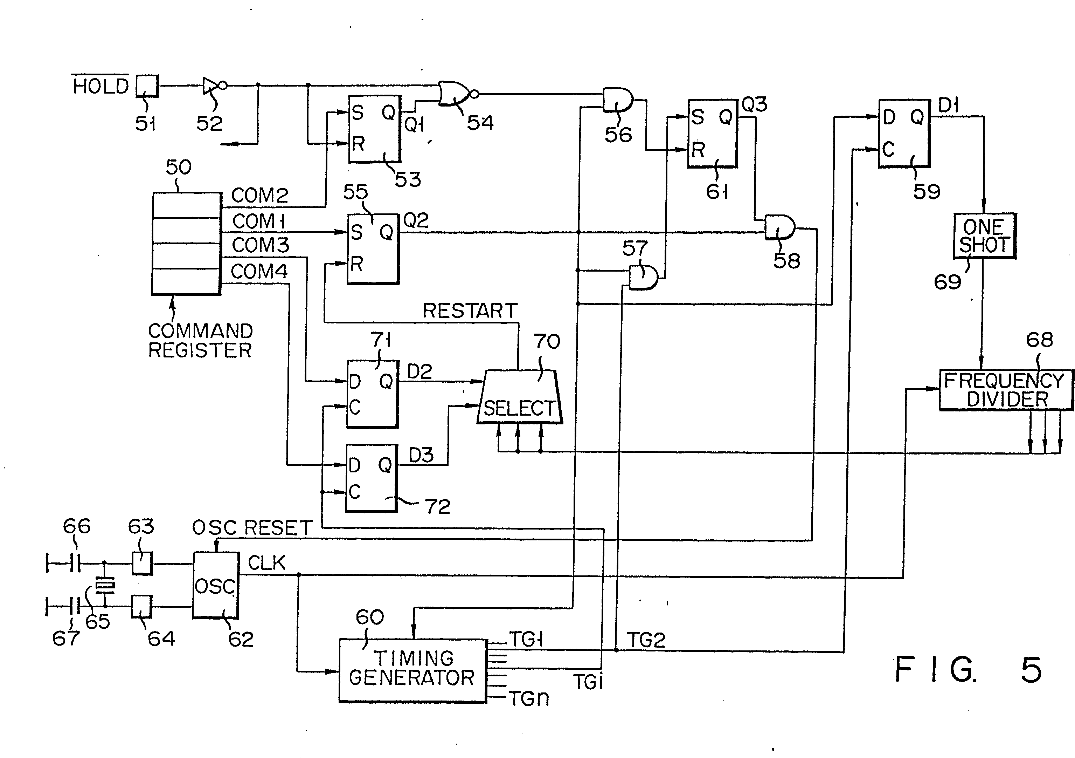

Referring to Fig. 5, reference numeral 51 designates an external terminal of a single chip microprocessor to which a hold operation control signal $\overline{HOLD}$ is applied. In the case of clock or timer application,

the signal $\overline{HOLD}$ is a time-counting reference signal having a frequency of 1 Hz and a duty cycle of 50 % which is supplied from an external oscillator of a low power consumption type as shown in Fig. 3. That is to say, the program processing is carried out every second.

The signal $\overline{HOLD}$ applied to the terminal 51 is supplied through an inverter 52 to a reset input of a set-reset flip-flop 53, and is also supplied to one input of a two-input NOR gate 54. A four-bit command register 50 is provided, from which four-bit command signals COM1, COM2, COM3 and COM4 are read out after predetermined program processings are executed in each cycle. The command signal COM2 is applied to a set input of flip-flop 53. The command signal COM1 is applied to a set input of a set-reset flip-flop 55.

An output $Q_2$ of flip-flop 55 is coupled to inputs of AND gates 56, 57 and 58 and to a data input D of a D-type flip-flop 59 and to a reset input of a timing generator 60. An output $Q_1$ of flip-flop 53 is coupled to the other input of NOR gate 54.

An output of NOR gate 54 is coupled to the other input of AND gate 56 having its output coupled to a reset input R of a flip-flop 61. To a set input S of this flip-flop 61, an output of the AND gate 57 to which a timing pulse $TG_2$ of timing generator 60 is applied and the output $Q_2$ of flip-flop 55 are coupled. An output $Q_3$ of flip-flop 61 is coupled to the other input of AND gate 58. An output of AND gate 58 is coupled to a high frequency oscillator 62 as an oscillation control signal OSCRESET.

The oscillator 62 is connected through external terminals 63 and 64 to an external oscillation element 65 and capacitors 66 and 67. The oscillator 62 is enabled to oscillate at several megahertz when the signal OSCRESET is at a low level, and is disabled at a high level. A clock signal CLK produced by oscillator 62 is applied to timing generator 60 and frequency divider 68.

The timing generator 60 generates various timing signals, $TG_1 - TG_n$, in response to application of the clock signal CLK thereto. The timing signal $TG_2$ is applied to AND gate 57 and a clock input C of·D-type flip-flop 59. The timing generator 60 receives at its reset input the output $Q_2$ of flip-flop 55, and is enabled when the output $Q_2$ is at a low level and is disabled when it shifts to a high level. The timing generator 60 is designed in such a manner that it is disabled after generating at least the timing pulse $TG_2$ in response to the output $Q_2$ of the flip-flop circuit 55 changing from the low level to the high level.

The flip-flop 59 drives a one-shot circuit 69 to form a one shot pulse when the output Dl changes from the low·level to high level. This one shot pulse resets the frequency dividing circuit 68. The diving circuit 68 has a plurality of cascade-connected stages for sequentially dividing the clock signal CLK. A plurality of dividing outputs are coupled to a selecting circuit 70.

D-type flip-flops 71 and 72 are provided, whose data inputs D are connected to receive the command signals COM3 and COM4, respectively. A timing pulse $TG_i$ from timing generator 60 is applied to clock inputs C of flip-flops 71 and 72. The logic levels of outputs $D_2$ and $D_3$ of flip-flops 71 and 72 depend upon the logic levels of the command signals COM3 and COM4. In accordance with a combination of those logic levels, the selecting circuit 70 selects and supplies one of the dividing outputs of frequency divider 68 to a reset input R of flip-flop 55 as a signal RESTART to restart the normal operation.

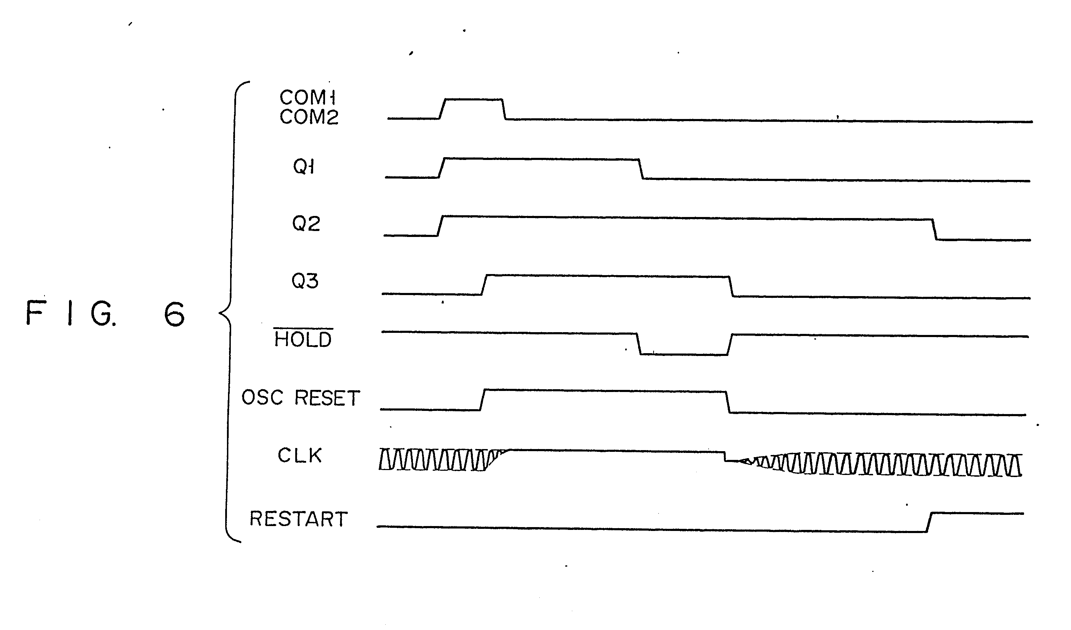

The operation of the microprocessor will now be described with reference to timing charts of Fig. 6.

It is now assumed that the signal $\overline{HOLD}$ is high and the flip-flops 53 and 55 are reset. Thus, the signal OSCRESET is low so that the oscillator 62 is oscillating. The reset signal to timing generator 60 is also low so that the timing generator 60 is operating. Therefore, the internal circuits are also performing the program processing with the result that a considerable amount of power is consumed.

After completion of the execution of a series of program processings, the command register 50 is accessed by a port address, so that the command signals COM1 to COM4 of predetermined logic levels are read out therefrom. In this embodiment, as shown in Fig. 6, the command signals COM1 and COM2 of a logic 1 level, are read out. In response to the command signal COM1 of a logic 1 level, flip-flop 55 is set and its output $Q_2$ goes high. In response to the command signal COM2 going high, flip-flop 53 is also set so that its output $Q_1$ goes high.

As described above, the timing generator 60 does not stop the operation immediately after the output $Q_2$ of flip-flop 55 goes high. Thus, the timing pulse $TG_2$ sets flip-flop 61 through AND gate 57 enabled by the output $Q_2$ of flip-flop 55 which is high, so that its output $Q_3$ goes high. At the same time, the output signal OSCRESET of AND gate 58 goes high to stop the oscillator 62. After the signal OSCRESET has gone high, the clock signal CLK formed by the oscillator 62 becomes gradually small in amplitude, and finally remains at a DC level. Therefore, all the internal circuits stop the switching operation, so that the hold operation starts in which the data memory and registers hold the previous contents.

The output $D_1$ of flip-flop 59 goes high in synchronism with the timing signal $TG_2$ which is generated after the timing generator 60 has been reset. As a result, the frequency divider 68 is reset by a one shot pulse produced by the one shot circuit 69 at a time when oscillator 62 is disabled.

Next, when the signal $\overline{\text{HOLD}}$ goes low, the flip-flop 53 is reset so that its output $Q_1$ goes low. However, the output of NOR gate 54 remains low.

When the signal $\overline{\text{HOLD}}$ goes high, the output of inverter 52 goes low, causing the output of NOR gate 54 to go high.

Since the output $Q_2$ of flip-flop 55 is high, the output of AND gate 56 goes high to reset flip-flop 61. As a result, the output signal OSCRESET of AND gate 58 goes low, so that the oscillator 62 starts oscillating, and the amplitude of the clock signal CLK gradually increases as shown in Fig. 6. However, the oscillation of oscillator 62 will be unstable for a short period of time. At this time, since the output $Q_2$ of flip-flop 55 is high, the timing generator 60 inoperative.

The frequency divider 68 starts its dividing operation when the oscillator 62 starts its operation, and its divided outputs are applied to the selecting circuit 70. The selecting circuit 70 selects one of a plurality of divided outputs in response to the logic levels of the outputs $D_2$ and $D_3$ of flip-flops 71 and 72. The flip-flop 55 is reset by the selected divided output with the result that the timing generator 60 is allowed to restart the operation. Specifically, the normal operation is restarted to execute the program processings when the signal $\overline{\text{HOLD}}$ goes high.

As is obvious from the above description, the timing generator 60 is released from its reset state a short time after the oscillator 62 has started oscillation. This is done in order to cause the timing generator 60 to stand by until the oscillating operation of the oscillator 62 becomes stable, thereby preventing a malfunction due to the unstable operation of the oscillator 62. This waiting time of the timing generator 60 is directly related to a warm-up time of the oscillator 62, and is selected by the selecting circuit 70. The warm-up time of the oscillator 62 may vary with the type of external oscillating element 65.

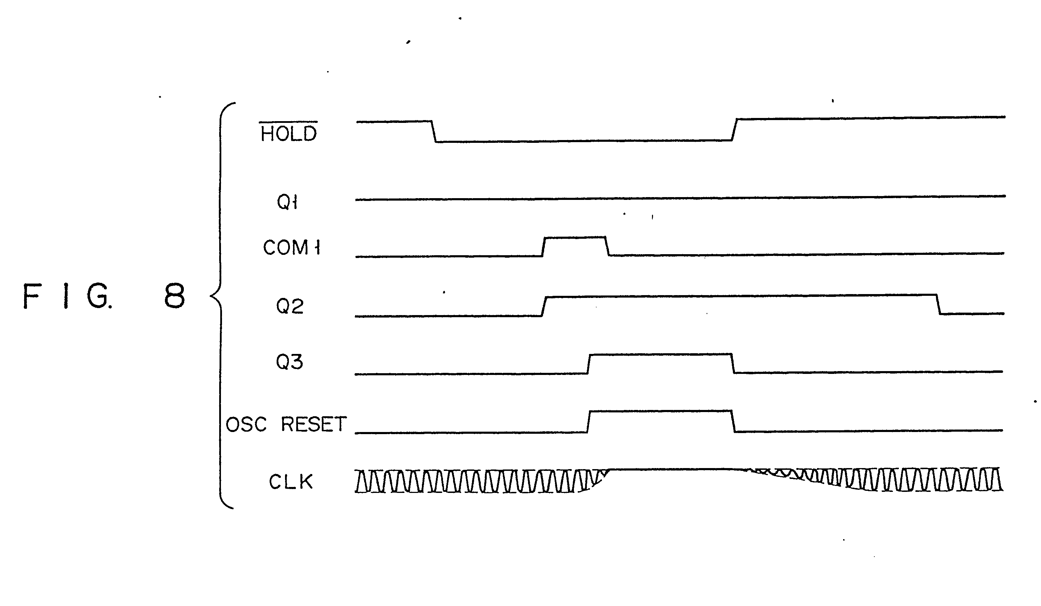

In this way, it is possible for the microprocessor of the present invention to start the holding operation through the program processing regardless of the signal $\overline{\text{HOLD}}$. Therefore, as in the case of clock or timer application, when the short-time program processings are executed in synchronism with the leading edge of the external signal $\overline{\text{HOLD}}$ having a duty factor of 50 %, it is possible to greatly reduce the power consumption, as shown in Fig. 7, compared with the conventional processor. Assuming that the period of the signal $\overline{\text{HOLD}}$ is one second and that the program processing time for clock or timer is about one millisecond (depending upon the capability of the processor), the power is consumed for 0.5 second in case of the timing charts of Fig. 4. On the other hand, as shown in Fig. 7, in case of the microprocessor of the present invention, the power is consumed for at most 1/500 of a second.

The method of controlling the start of the hold operation and restart of the normal operation on the basis of the signal $\overline{\text{HOLD}}$ applied to the terminal 51 is effective for the perfect stand-by operation. In other words, the above-mentioned method will be effective in the case where a back-up battery is used when the power supply is broken. The microprocessor of the present invention can cope with such an application by changing the logic levels of the command signals COM1 and COM2.

As shown in Fig. 8, to carry out the above-mentioned operation, it is only required that the trailing edge of the signal $\overline{\text{HOLD}}$ be monitored by a program, and when this trailing edge is detected, only the command signal COM1 be made high.

To put it more concretely, when the signal $\overline{\text{HOLD}}$ becomes low, the flip-flop 53 is reset. When the program detects the trailing edge of the signal $\overline{\text{HOLD}}$ the command signal COM1 becomes high so that the flip-flop 55 is set to start the hold operation as described above. Next, when the signal $\overline{\text{HOLD}}$ becomes high level, the output of NOR gate 54 goes high to reset flip-flop 61. Thus, the normal operation is restarted as previously described.

Claims:

1. A CMOS single chip microprocessor which comprises an oscillator and a timing generator for operating internal circuits and is responsive to an operation control signal of a fixed cycle period to alternately execute a holding operation in which said oscillator and said timing generator are stopped, and a normal operation in which said oscillator and said timing generator operate to cause said internal circuits to perform program processings, said microprocessor comprising:

first means (50) for producing command signals (COM1 to COM4) in accordance with said program processings; and

second means (53 to 59, 68 to 72) connected to receive said command signals and said operation control signal ($\overline{HOLD}$) for stopping the operations of said oscillator (62) and said timing generator (60) in response to the command signals and restarting the operations of said oscillator (62) and said timing generator (60) in response to a transition of the operation control signal ($\overline{HOLD}$) from a first level to a second level.

2. A microprocessor according to claim 1, characterized in that the operation control signal ($\overline{HOLD}$) is supplied by an external oscillator through an external terminal (51).

3. A microprocessor according to claim 1, characterized in that said second means is arranged to stop successively said timing generator (60) and said oscillator (62) in response to said command signals (COM1, COM2) and to restart successively said oscillator (62) and said timing generator (60) in response to the level transition of the operation control signal ($\overline{HOLD}$).

4. A microprocessor according to claim 3, characterized in that the time interval from a time when said oscillator (62) restrats its operation to a time when said timing generator (60) restarts its operation is determined on the basis of a warm-up time of said oscillator (62).

5. A microprocessor according to claim 1, characterized in that

said first means (50) is arranged to produce first to fourth command signals (COM1 to COM4) in accordance with the program processings, and wherein

said second means includes:

a flip-flop circuit (55) which is set by the first command signal (COM1) to stop said timing generator (60);

first circuit means (53, 54) for detecting the transition of the operation control signal ($\overline{\text{HOLD}}$) from the first level to the second level in response to the second command signal (COM2) and the operation control signal;

second circuit means (56, 57, 58, 61) responsive to said flip-flop circuit (55) and said first circuit means (53, 54) for stopping said oscillator (62) after said flip-flop circuit (55) has been set and starting said oscillator upon detection of the level transition of the operation control signal by said first circuit means when said flip-flop circuit is set;

third circuit means (59, 68, 69) for frequency-dividing an output signal of said oscillator to provide a plurality of frequency-divided outputs; and

fourth circuit means (70, 71, 72) responsive to the third and fourth command signals (COM3, COM4) to select one of the divided outputs of said third circuit means to reset said flip-flop circuit (55) by a selected divided output, thereby making said timing generator (60) operative.

# F I G. 1A

# F I G. 1B

# F I G. 2

# F I G. 3

0103755

FIG. 4

$\overline{HOLD}$

$P_O$

FIG. 7

$\overline{HOLD}$

$P_O$

F I G. 5

0103755

F I G.  6

COM1
COM2

Q1

Q2

Q3

$\overline{\text{HOLD}}$

OSC RESET

CLK

RESTART

F I G. 8

HOLD

Q1

COM1

Q2

Q3

OSC RESET

CLK